# EUROPEAN PATENT APPLICATION

(11) **EP 3 258 434 A1**
(43) Date of publication of application: **20.12.2017**
(21) Application number: 17176234.7
(22) Date of filing: 15.06.2017
(51) Int. Cl.: G06Q 10/08, G06Q 50/28

(54) **METHOD AND SYSTEM FOR PROCESSING A REQUEST TO TRANSPORT A CONSIGNMENT**

(30) Priority: 16.06.2016 NL 2016975
(71) Applicant: TNT Holdings B.V., 2132 LS Hoofddorp (NL)
(72) Inventor: Davies, Ben, 2132 LS Hoofddorp (NL); Lepot, Pierre, 2132 LS Hoofddorp (NL); Cortes y Flores, Miguel, 2132 LS Hoofddorp (NL); Rindone, Valentina, 2132 LS Hoofddorp (NL)
(74) Representative: De Vries & Metman

(57) **Abstract**

A method comprises the steps of receiving a customer request to transport a consignment, the customer request identifying a destination address, determining a destination depot from the customer request, determining a routing path for transportation of the consignment from the customer request by using routing point information, the routing path comprising a plurality of routing points and the plurality of routing points comprising the destination depot and at least one intermediate routing point between an origin depot and the destination depot, receiving a measured weight and/or a measured size of the consignment from a measurement system at the origin depot, and determining whether the routing path can be used for transportation of the consignment by checking whether the measured weight and/or the measured size can be handled by each of the plurality of routing points.

## Description

### Field of the invention

The invention relates to a method of receiving a request to transport a consignment.

The invention further relates to a system for receiving a request to transport a consignment.

The invention also relates to a computer program product enabling a computer system to perform such a method.

### Background

Every day delivery companies have to make sure there is enough capacity to ship a regular flow of documents, parcels, boxes, pallets, freight, and cargo, all together referred to as "consignment". In addition, every day these companies receive requests to transport oversized or heavy consignments which may not be covered by standardized deliveries, especially in case transport by air is needed, but also, for example, in case transport by road is needed and the consignments are very heavy, e.g. weigh more than 7000kg. Currently, approval of requests for transportation of consignments takes place by exchanging multiple emails with various parties involved - such as senders and receivers at each routing point of a particular routing path identified for the delivery. If only one or two routing points are involved between an origin depot and a destination depot, an approval may be obtained relatively quickly. However, if several routing points become involved, confusion often arises with respect to the status of a request, excessive number of emails need to be exchanged, and it often takes a long time to get an approval or a rejection of a request. Not only is such process inefficient in terms of the use of resources, both human and computational, but also the delays in the approval process often result in reduced customer satisfaction and could even lead to a customer going to another delivery company that is able to provide a resolution faster.

### Summary of the invention

It is a first object of the invention to provide a method of receiving a request to transport a consignment, which improves on at least some of the drawbacks described above.

It is a second object of the invention to provide a system for receiving a request to transport a consignment, which improves on at least some of the drawbacks described above.

According to the invention, the first object is realized in that the method comprises the steps of a processor receiving a customer request to transport a consignment, said customer request identifying a destination address, a processor determining a destination depot from said customer request, a processor determining a routing path for transportation of said consignment from said customer request by using routing point information stored on a storage facility, said routing path comprising a plurality of routing points, said plurality of routing points comprising said destination depot and at least one intermediate routing point between an origin depot and said destination depot, a processor receiving a measured weight and/or a measured size of said consignment from a measurement system at said origin depot, and a processor determining whether said routing path can be used for transportation of said consignment by checking whether said measured weight and/or said measured size can be handled by each of said plurality of routing points.

Hence, in response to a customer request for transportation of a consignment, by using a measurement system, the method enables a delivery system to efficiently and quickly determine whether said consignment, e.g. an oversized or heavy consignment, can be transported to said destination address. This way, the types of transportation services that can be offered via the delivery network may be extended and a more efficient use of the capabilities of the delivery network infrastructure, in particular of the capacity for transportation of consignments, may be realized.

Said method may be performed by software running on one or more programmable devices. This software may be provided as a computer program product. Said measured size of said consignment may comprise at least one of a volume, one or more dimensions and a shape of said consignment. Whether a routing point can handle a consignment may depend on what the next routing point after the routing point is. For example, a gateway may be able to transport to a first set of other gateways over the air and to a second set of other gateways over the road and transportation over the air may have more restrictions.

Said step of a processor determining whether said routing path can be used for transporting said consignment may comprise the steps of a processor identifying at least one approver associated with one or more of said plurality of routing points, a processor providing a transportation request to each of said at least one approver, said transportation request comprising said measured weight and/or said measured size, a processor receiving a response to said transportation request from each of said at least one approver,a processor determining from said received responses that said routing path can be used for transportation of said consignment if each of said at least one approver approves said transportation request, and a processor determining from said received responses that said routing path cannot be used for transportation of said consignment if at least one of said at least one approver rejects said transportation request.

Since for many routing points, it is not possible or desirable to check for whether this routing point is able to handle a consignment without involving at least one human, it is often necessary to ask approval from one or more approvers in order to check whether some or all of the routing points can handle (the weight and/or size of) the consignment. For these routing points, a human approver can be asked to manually approve transportation of the consignment. For example, a human approver may receive a message informing him that a transportation request is waiting for his approval in an approval system. The human approver may then log in to the approver system, check the details of the consignment (including weight and/or size) and approve or reject the transportation request.

Said step of a processor identifying at least one approver associated with one or more of said plurality of routing points may comprise a processor comparing said measured weight and/or said measured size with one or more weight thresholds and/or size thresholds, each weight threshold and/or size threshold being associated with one or more routing points of said routing path, and a processor identifying at least one approver associated with one or more routing points with which a weight threshold lower than said measured weight and/or a size threshold lower than said measured size is associated. This is beneficial when the definition of what an oversized or overweight consignment is not the same for all routing points. For example, by associating thresholds with certain routing points, e.g. routing points that allow heavier and/or larger consignments than normal without requiring approval, the amount of unnecessary transportation requests may be reduced.

Said transportation request may comprise at least part of at least one image captured by at least one camera. This may help an approver determine whether to approve or reject a transportation request. The at least part of at least one image may comprise a 3D image or a collated image, for example.

Said customer request may comprise an indicated weight and/or an indicated size of said consignment and said method may further comprise the step of a processor determining whether said routing path can be used for transportation of said consignment by checking whether said indicated weight and/or indicated size can be handled by each of said plurality of routing points. It saves time and cost to check whether a consignment can be transported to the destination address before a driver tries to collect the consignment from the origin/pickup address.

Said method may further comprise the step of comparing said measured weight and/or said measured size with said indicated weight and/or said indicated size and said step of a processor determining whether said routing path can be used for transportation of said consignment by checking whether said measured weight and/or said measured size can be handled by each of said plurality of routing points may only be performed if said measured weight and/or said measured size deviate more than a certain amount from said indicated weight and/or said indicated size. The fact that a driver is able to collect a consignment from the origin address does not necessarily mean that it is not heavier and/or larger than indicated and this may mean that the determined routing path cannot be used for transportation of said consignment as previously expected, especially when transport by air is involved. If the deviation as result of the measurement(s) is large enough, the routing path may need to be checked again, this time with the measured weight and/or the measured size. If the deviation is not large enough, this can be skipped.

Said step of a processor determining whether said routing path can be used for transportation of said consignment by checking whether said measured weight and/or said measured size can be handled by each of said plurality of routing points may only be performed if said measured weight is at least a certain amount higher than said indicated weight and/or a largest measured dimension of said consignment is at least a certain amount larger than a largest indicated dimension of said consignment. A new check of the routing path with the measured weight and/or the measured size is most likely to be necessary if the measured weight is at least a certain amount higher than the indicated weight and/or if a largest measured dimension (e.g. a height dimension) of the consignment is at least a certain amount larger than a largest indicated dimension of the consignment.

Said customer request may further comprise information indicating a service level for transportation of said consignment, said service level being selectable from a plurality of service levels. Said customer request may further comprise information indicating a collection date for collecting said consignment for transportation. Said plurality of routing points may comprise two or more intermediate points between said origin depot and said destination depot.

If said processor has determined that said routing path cannot be used for transporting said consignment, said method may further comprise the steps of a processor determining an alternative routing path for transportation of said consignment from said customer request by using said routing point information, said alternative routing path comprising said destination depot and at least one alternative intermediate routing point between said origin depot and said destination depot or an alternative destination depot and at least one intermediate routing point between said origin depot and said alternative destination depot and a processor determining whether said alternative routing path can be used for transportation of said consignment by checking whether said measured weight and/or said measured size can be handled by each routing point of said alternative routing path.

When the initially determined routing path cannot be used for transporting the consignment, another routing path may be determined and checked. This may be repeated until a suitable routing path is found or no more alternative routing paths are available. If determining whether a routing path can be used involves providing one or more transportation requests to one or more approvers, it may be possible to limit approval requests for the alternative routing path(s) to only routing points not included in the (initial) routing path. It may not always be possible to use an alternative destination depot, e.g. if the customer wants to pick up the consignment at a certain destination depot or if there is only one destination depot near the destination address.

According to the invention, the second object is realized in that the system for receiving a request to transport a consignment comprises at least one receiver, a measurement system at an origin depot, a storage facility for storing routing point information, and at least one processor configured to use said at least one receiver to receive a customer request to transport a consignment, said customer request identifying a destination address, to determine a destination depot from said customer request, to determine a routing path for transportation of said consignment from said customer request by using said routing point information stored on said storage facility, said routing path comprising a plurality of routing points, said plurality of routing points comprising said destination depot and at least one intermediate routing point between said origin depot and said destination depot, to receive a measured weight and/or a measured size of said consignment from said measurement system, and to determine whether said routing path can be used for transportation of said consignment by checking whether said measured weight and/or said measured size can be handled by each of said plurality of routing points.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations comprising: receiving a customer request to transport a consignment, said customer request identifying a destination address, determining a destination depot from said customer request, determining a routing path for transportation of said consignment from said customer request by using routing point information stored on a storage facility, said routing path comprising a plurality of routing points, said plurality of routing points comprising said destination depot and at least one intermediate routing point between an origin depot and said destination depot, receiving a measured weight and/or a measured size of said consignment from a measurement system at said origin depot, and determining whether said routing path can be used for transportation of said consignment by checking whether said measured weight and/or said measured size can be handled by each of said plurality of routing points.

As will be appreciated by one skilled in the art, aspects of the present invention may be embodied as a system, a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/ microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the drawings

**Fig. 1** depicts an example of at least a part of a delivery network according to an embodiment of the invention.
**Fig. 2** depicts at least a part of a consignment transportation approval system according to an embodiment of the invention.
**Fig. 3** depicts a first embodiment of a measurement system of the system of the invention;
**Fig. 4** depicts the measurement system of Fig.3 while loading three objects;
**Fig. 5** depicts the measurement system of Fig.3 while scanning a first object with first cameras;
**Fig. 6** depicts the measurement system of Fig.3 while scanning a first object with second cameras;
**Fig. 7** depicts the measurement system of Fig.3 after the scanning of the first object is complete;
**Fig. 8** depicts the measurement system of Fig.3 while scanning a second object with first cameras;
**Fig. 9** depicts the measurement system of Fig.3 after the scanning of the second object is complete;
**Fig. 10** depicts a second embodiment of a measurement system of the system of the invention;
**Fig. 11** is a flow diagram of method steps for receiving a request to transport a consignment according to an embodiment of the invention.
**Fig. 12** depicts an example of a routing path divided into sectors according to an embodiment of the invention.
**Fig. 13** depicts a block diagram illustrating an exemplary data processing system that may be used in a system for receiving a request to transport a consignment according to the invention.

### Detailed description

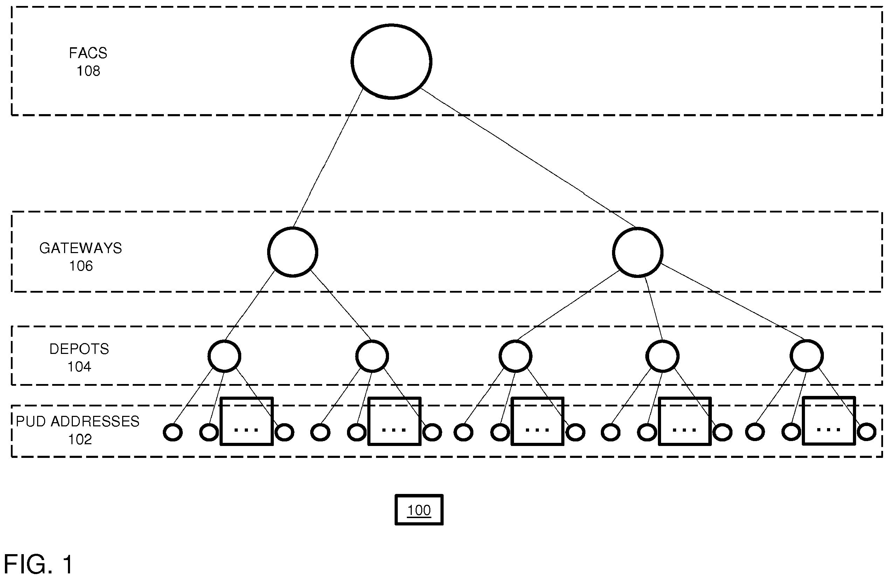

In order to transport consignments in a standardized way with a high throughput, a delivery system typically uses a delivery network comprising various elements. An example of such a delivery network is shown in **Fig. 1****.** As shown in **Fig. 1****,** the delivery network **100** may be viewed as a structure with several layers of hierarchy.

Various addresses **102** for pickup and delivery (PUD) of consignments such as e.g. documents, parcels, boxes, pallets, freight, and cargo may be considered to be at the base layer of such a structure. A PUD address **102** could be e.g. an address of a private individual or a company's address.

At the next layer of the delivery network **100** may be depots **104**, strategically deployed in different geographical areas (depot zones) of a service area of the delivery network, with the intention that each depot serves multiple PUD addresses within its respective depot zone. Consignments typically arrive at and leave the depots by means of trucks, sometimes referred to as line haul. A depot may be configured as an origin depot and/or a destination depot, with a typical depot being configured as both an origin and a destination depot. An origin depot is configured to receive consignments that need to be delivered to a different destination depot. A destination depot is configured to receive consignments from origin depots and process these consignments so that they can be delivered to PUD addresses within the depot zone of the destination depot.

Two or more depots may be associated with (i.e. assigned to) one of the gateways **106**, which form the next layer of the hierarchy. Similar to a depot, a gateway is typically responsible for a particular geographical area (gateway zone), i.e. responsible for serving the depots within a gateway zone, with a gateway zone typically being larger than a depot zone. A gateway may be viewed as a transit point for the transportation of a consignment from the origin to the destination depot. In other words, a gateway is typically an entry and/or exit point to travel in a network and typically several depots are linked to each gateway.

Two or more gateways **106** may, in turn, be associated with (i.e. assigned to) one of the Freight Approval Centers (FACs) **108**, which form the top layer of the exemplary hierarchy shown in **Fig. 1****.** Similar to depots and gateways, a FAC is also typically responsible for a particular geographical area (FAC zone), i.e. responsible for serving gateways and depots within a FAC zone, with a FAC zone typically being larger than a gateway or a depot zone. A FAC is responsible for assuring that approval is sought for each transportation sector under its responsibility, as described in greater detail below.

While the delivery network **100** is illustrated to have four levels, the teachings provided in the present application are applicable to other configuration of a delivery network which may have additional layers and/or individual elements not shown in **Fig. 1****,** such as e.g. hubs responsible for sorting, transiting, and consolidating consignments during their transportation. Furthermore, the numbers of PUD addresses **102**, depots **104**, gateways **106**, and FACs **108** shown in **Fig. 1** were selected for illustration purposes only and, in other embodiments, any number of each of these entities may be implemented.

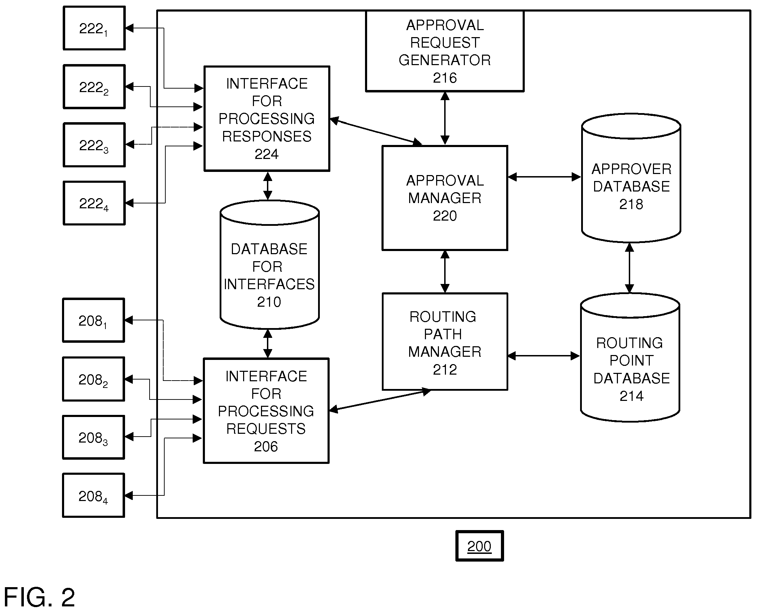

**Fig. 2** depicts at least a part of a consignment transportation approval (CTA) system **200** according to an embodiment of the invention. The CTA system **200** may be configured to communicate with different user-interfaces such as customer terminals and sub-contractor terminals. In particular, the CTA system **200** may receive requests for consignment transportation via an interface **206** for processing requests, e.g. a graphical user interface (GUI), and in response to these requests, initiate an approval process for approval or rejection of the requests. The interface **206** may be implemented as a web-interface. For example, a customer may use one of the customer terminals **208₁₋₄,** e.g. a computer, a smartphone, an electronic tablet, etc., to fill in a customer request form for transportation of a consignment. A request identifies at least a destination address, which may be a destination depot, for example. A request may comprise information indicating the origin depot, e.g. if the customer intends to bring the consignment to the origin depot himself. Preferably a request also comprises other information related to the desired transportation service such as a collection date and time, a delivery date and time, consignment dimensions and weight, consignment type, whether the consignment is palletized or stackable, etc.

The interface **206** may be configured to access a database **210** storing e.g. selectable items which could be offered to a customer filling out a request form to make a selection from. For example, the database **210** may identify various depots from which a customer may e.g. select an origin depot and/or a destination depot, types and service levels of transportation available, different dimension and weight categories for describing the dimension and weight of the consignment, etc. While, in some embodiments, a customer may be provided with an opportunity to select entries for filling out a request form, in other embodiments, the CTA system **200** may be configured to determine desired information based on other information provided by the customer. For example, instead of a customer selecting an origin depot and/or selecting a destination depot, the CTA system **200** may be configured to determine these depots based e.g. on the postal area codes indicated by the customer (which indication may be provided via the interface **206**).

The CTA system **200** may further comprise a routing path manager **212** configured to receive information submitted in a request via the interface **206** and identify one or more routing paths, in terms of the routing points involved, for transportation of a consignment from an origin depot to a destination depot. To that end, the routing path manager **212** may be configured to access a routing point database **214**. The routing point database **214** may comprise routing point identifiers (e.g. unique codes), geographical locations of routing points and parameters that may be used to identify or control routing point processes. These parameters may e.g. include the distance and travel time from one routing point to another, routing point process identifiers for identifying certain consignment processing schemes and processing times of the routing points.

The routing point database **214** may further comprise information on the delivery network, e.g. information regarding the limitations and/or conditions for transportation of consignments, information on the locations between the basic entities forming the delivery network (e.g. parcel processing depots and/or hubs), the distances and/or traveling times between the routing points, the average time that a routing point needs for processing transportation of a consignment and handling limitations of a given location.

Furthermore, CTA system **200** may also comprise approval manager **220** for obtain approvals from at least one approver. The approval manager **220** may be configured to identify a FAC associated with each routing point of the routing path(s) identified by the routing path manager **212**. The approval manager **220** may be configured to access an approver database **218** storing information that associates routing points with respective FACs. Once the one or more FACs associated with a particular routing path have been identified, the approval request generator **216** may provide approval requests to one or more identified approvers. The approvers may then use approver terminals **222₁₋₄** to log in to interface for processing responses **224** and use this interface **224** to provide a response to the approval request. Interface **224** may be usable in a similar manner as interface **206.**

The interfaces **206** and **224**, the routing path manager **212**, the approval manager **220**, and the approval request generator **216** may be software components/functions performed on one or more processors. The databases **210**, **214** and **218** may be separate databases or one or more of these databases may be combined. In an embodiment, the interface for processing requests **206** receives a customer request to transport a consignment from one of the customer terminals **208₁₋₄** and determines a destination depot from the customer request by using information from the database **210**. The customer request identifies a destination address and may identify the destination depot, e.g. if the customer selected a destination depot from a list of depots. If the customer request does not identify the destination depot, the interface **206** may select one close to the destination address.

The customer request typically, but not necessarily, includes an indicated weight and an indicated size. The routing path manager **212** then determines an initial routing path for transportation of the consignment from the customer request by using routing point information stored in database **214**. The initial routing path comprises a plurality of routing points including the destination depot and at least one intermediate routing point between an origin depot and the destination depot. The routing path manager **212** then determines whether the routing path can be used for transportation of the consignment by checking whether the indicated weight and the indicated size can be handled by each of the plurality of routing points.

In this embodiment, the approval manager **220** first compares the indicated weight with one or more weight thresholds and compares the indicated size with one or more size thresholds and identifies at least one approver associated with one or more routing points, e.g. with one or more FACs, with which a weight threshold lower than the indicated weight or a size threshold lower than the indicated size is associated. If the weight threshold of a certain routing point is equal to or higher than the indicated weight and the size threshold of this certain routing point is equal to or higher than the indicated size, the approval manager **220** determines that the routing point is able to handle the consignment. Associations between weight and size thresholds and routing points are stored in the approver database **218**. Associations between approvers and routing points are also stored in the approver database **218**. A single approver may be associated with multiple routing points, e.g. with a FAC. An approver may be able to forward/delegate an approval, i.e. transportation, request to someone else.

The approval request generator **216** provides a transportation request to each of the identified approvers, e.g. by e-mail, SMS message or chat message. The transportation request comprises the indicated weight and/or the indicated size. The identified approvers then use approver terminals **222₁₋₄** to log in to interface for processing responses **224**, e.g. a web interface or an app running on a mobile device, and use this interface **224** to provide a response to the transportation request to the approval manager **220**. The approval manager **220** then determines from the received responses that the routing path can be used for transportation of the consignment if each of the at least one approver approves the transportation request and that the routing path cannot be used for transportation of the consignment if at least one of the at least one approver rejects the transportation request.

When the approval manager **220** has determined that the routing path cannot be used for transporting the consignment, the approval manager **220** requests the routing path manager **212** to determine an alternative routing path. The routing path manager **212** determines an alternative routing path for transportation of the consignment from the customer request by using the routing point information stored in database **214**. The alternative routing path comprises the destination depot and at least one alternative intermediate routing point between the origin depot and the destination depot or an alternative destination depot and at least one intermediate routing point between the origin depot and the alternative destination depot.

The routing path manager **212** determines whether the alternative routing path can be used for transportation of the consignment by checking whether the indicated weight and the indicated size can be handled by each routing point of the alternative routing path. For routing points for which it has not already been checked whether they can handle the indicated weight and the indicated size, the approval manager **220** checks whether they can handle the indicated weight and the indicated size and provides approval requests in the previously described manner. This may be repeated until an acceptable routing path is found or until no acceptable routing path is determined to be available. In case of the latter, the customer is informed that its consignment cannot be transported to the destination address.

When the consignment arrives at the origin depot and has been scanned, the routing path manager **212** receives a measured weight and a measured size of the consignment from a measurement system at the origin depot. The measured size of the consignment may comprise a volume, one or more dimensions and/or a shape of the consignment.

If the customer indicated a weight and size in its customer request, the routing path manager **212** compares the measured weight and the measured size with the indicated weight and the indicated size and if the measured weight or the measured size deviate more than a certain amount from the indicated weight and the indicated size, the approval manager **220** needs to redo the check whether the routing points can handle the weight and size of the consignment, but now for the measured weight and the measured size of the consignment. Typically, repeating this check is not necessary if the measured weight is lower than the indicated weight and if the measured size is lower than the indicated size. Repeating this check is especially useful when the measured weight is at least a certain amount higher than the indicated weight or when the largest measured dimension is at least a certain amount larger than the largest indicated dimension.

If the customer has not indicated a weight and size in its customer request, the routing path manager **212** may need to determine a routing path for the first time and the approval manager **220** needs to check whether the routing points are able to handle the measured weight and measured size of the consignment. This is done in the manner as described previously, but now with the measured weight and the measured size instead of the indicated weight and the indicated size.

If approval is requested with the measured weight and the measured size, at least part of at least one image captured by at least one camera may be provided to the approver(s), e.g. in the interface **224**.

While the databases and modules defined in **Fig. 2** are illustrated as separate functional entities, all or some parts of these modules and/or databases may be part of or integrated with other functional module and/or databases. Moreover, some modules and/or databases illustrated in **Fig. 2** may be implemented as one functional module and/or database.

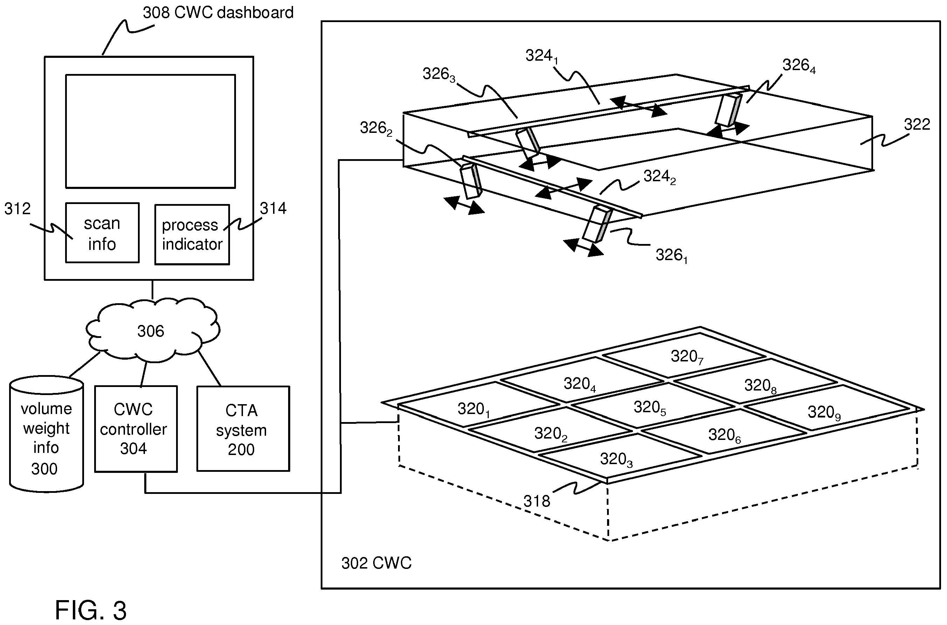

The method of the invention involves determining a measured weight and/or a measured size of the consignment at an origin depot by using a measurement system. Such a measurement system may comprise optical means (e.g. a camera and/or a laser system; or an ultrasonic system) for determining or estimating the size of the consignment. An embodiment of such a measurement system is shown in **Fig. 3**. It should be appreciated that a volume determination means does not necessarily provide the exact volume of a consignment, but may e.g. calculate a three-dimensional volume shape as the smallest enclosing rectangular box enclosing the consignment.

**Fig. 3** depicts a Check Weight Cube (CWC) **302** for non-conveyables that is optimized for high throughput processing. The CWC **302** comprising a weighing system **318** comprising a plurality of electronic scales **320** and a volume scanning system **322** comprising a number of movable cameras **326**. The scanning system may comprise mounting frames **324** for mounting the movable cameras so that the cameras can be moved to different x,y positions in a plane parallel to the top surface of the scale.

The CWC **302** is connected to a CWC controller **304** for controlling the scanning process and, via network **306**, to a CWC dashboard **308**, e.g. one or more large displays mounted close to the CWC **302**, a display in the forklift truck, a mobile phone or another graphical user interface such as a head-mounted display, e.g. Google glasses. The electronic scales **320** are integrated in the floor of a depot such that the surface of the floor matches the top surface of the scales. This way forklifts can mount and demount consignments in a very fast way. Moreover, the plurality of scales (the matrix of scales) under the volume scanning system can be controlled such that one or more of the scales of the plurality of scales forms a scale for consignments of a particular size. Hence, the plurality of scales can be configured into different of scales of different sizes. This way scanning processes of different consignments can be processed in parallel.

Further, during the scanning process, the CWC dashboard **308** informs a forklift driver about the status of the scanning process using a process indicator **314**. Further it can display scanned information **312**, e.g. weight and volume. Once the scanning process is finished the data may be stored in a database **300** and/or forwarded to the CTA system **200** which can use this information to check whether a certain routing path can be used. The volume and weight information is also used for optimizing and increasing the safety of processes within a depot or a hub.

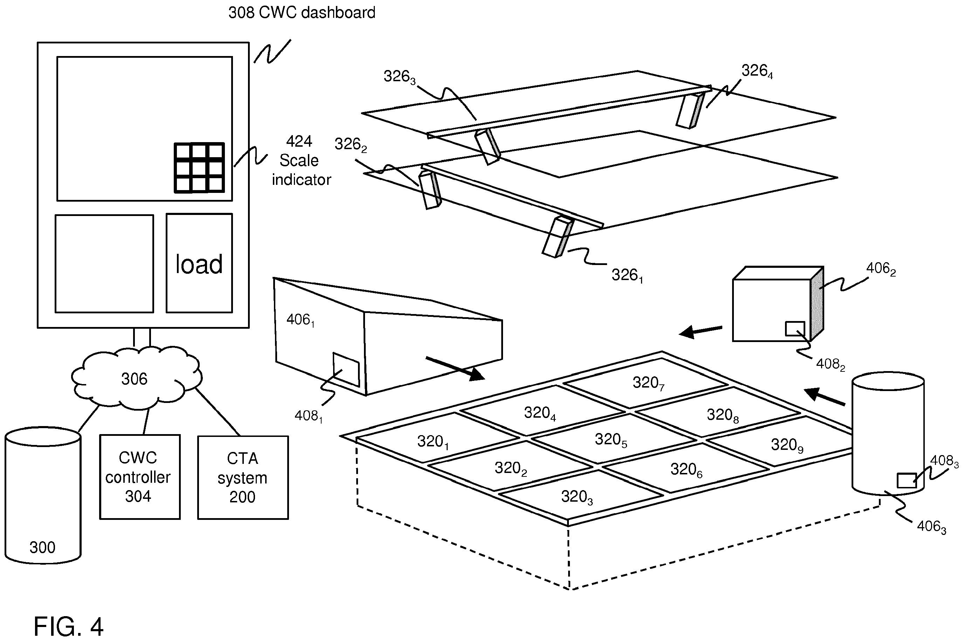

The CWC of **Fig. 3** can be used for high throughput scanning of non-conveyables. This process, which is executed by the CWC controller **304** connected to the management system of the PUD network, is illustrated hereunder with reference to **Figs. 4** to **9****.**

**Fig. 4** depicts a first phase wherein the CWC indicates via the CWC dashboard **308** that consignments can be loaded onto the scales. A scale indicator **424** in the dashboards signals a forklift driver which scales are ready for receiving a consignment. Different consignments may be loaded onto different scales of the plurality of scales of the weighing system of the CWC. In that case, the weighing system **318** senses that a first consignment **406₁** is loaded onto four electronic scales which the CWC controller **304** configures as a first combined scale for weighing the first consignment. Similarly, a second consignment **406₂** is loaded on two electronic scales that are configured as a second combined scale for weighing the second consignment and a third consignment **406₃** is loaded on a signal electronic scale for weighing the third consignment.

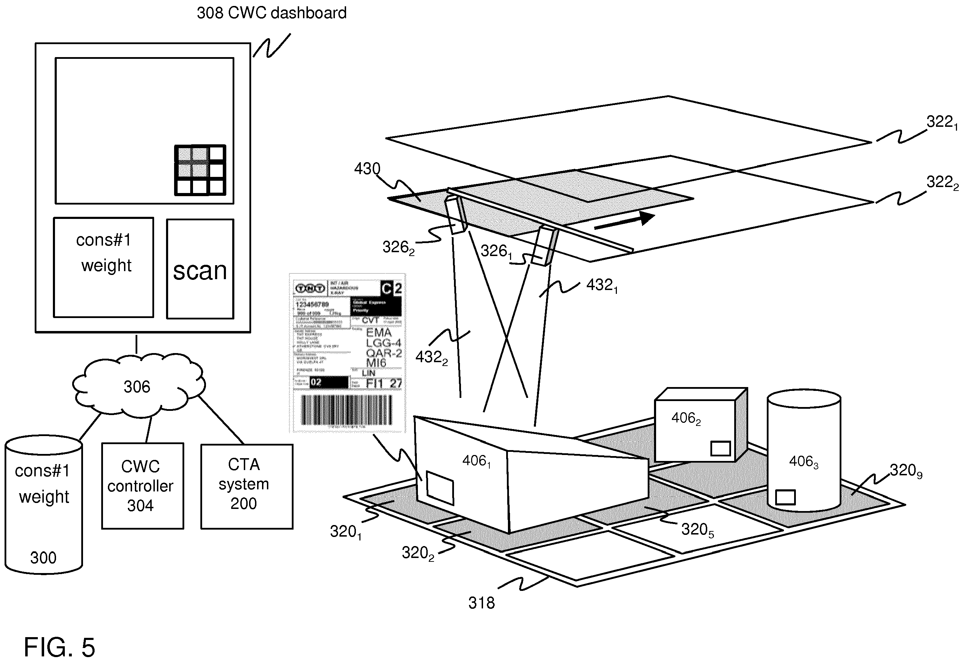

Then, in a second phase as shown in **Fig. 5**, the weighing and scanning process is started. To that end, the first combined scale weighs the first consignment and transmits the measured weight to the CWC controller **304** which may display the value onto the dashboard. The scales that are active in the process may be displayed on the CWC dashboard **308**. As the CWC controller **304** knows the position of the scales in the matrix the scanner and uses this information in order to define a scanning area **430**, see **Fig. 5**, which the volume scanning system uses in order to determine a 3D picture of the first consignment. This picture includes an ID of the consignment (e.g. a bar code **408**) which can be analyzed and recognized using well-known image recognition software. The thus determined consignment ID can be displayed on the CWC dashboard **308** as well.

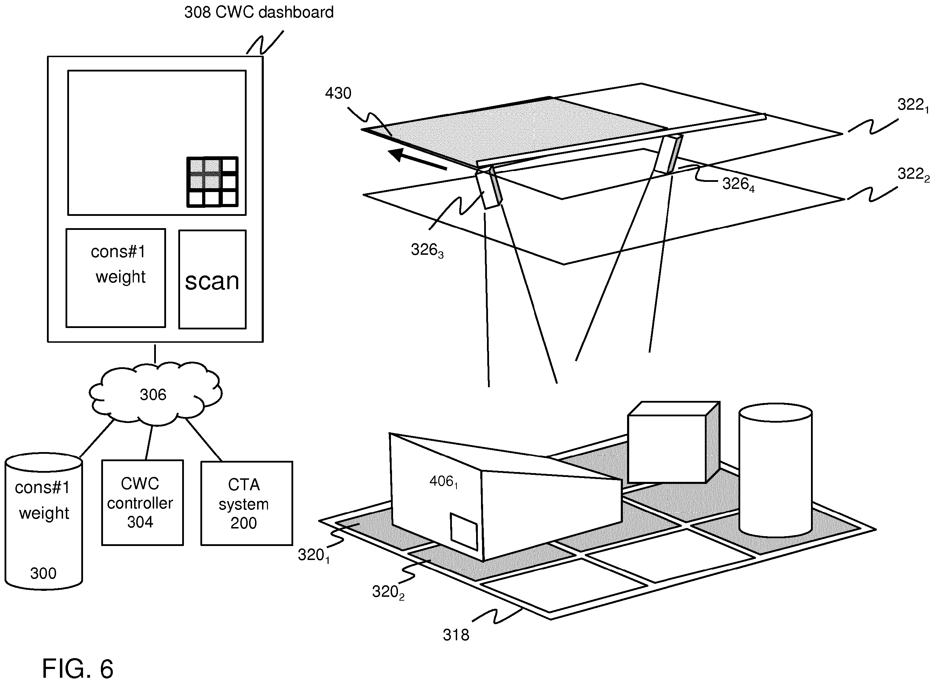

**Fig. 5** depicts cameras **326₁** and **326₂** moving to the right in order to perform a first scan of consignment **406₁** in scanning area **430** with the help of scanning beams **432₁** and **432₂.** **Fig. 6** depicts cameras **326₃** and **326₄** moving to the back in order to perform a second scan in scanning area **430** of consignment **406₁.**

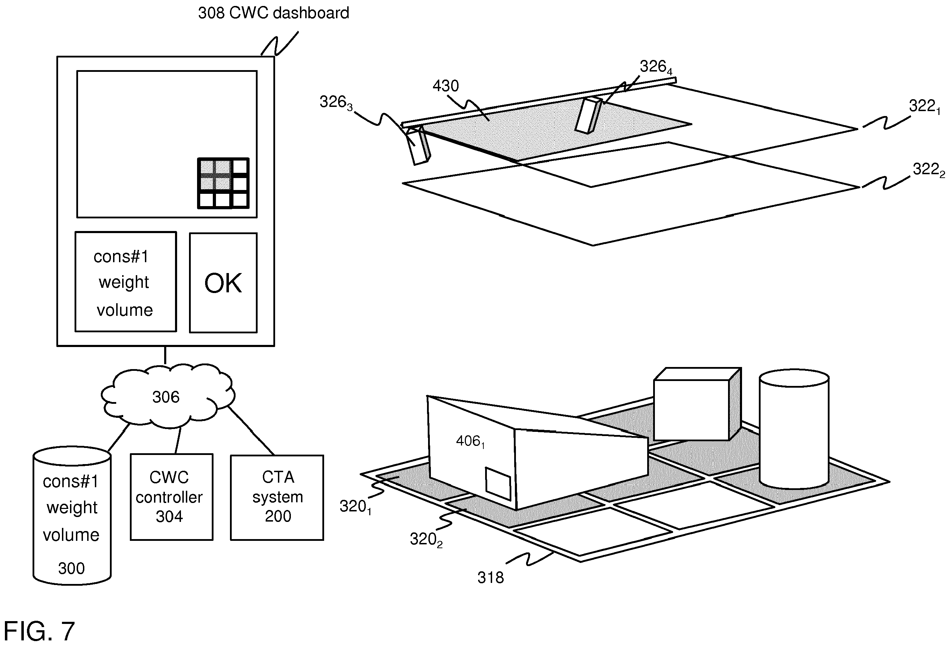

In the third phase, shown in **Fig. 7**, the CWC controller **304** determines that the volume scanning process was successful and displays the measured volume onto the CWC dashboard **308**. The scanned information, i.e. the consignment ID, weight and volume is stored in the database **300** and forwarded to the CTA system **200**. The CTA system **200** may use the scanned information in combination with the geographical location of the depot in the PUD network and other relevant information (e.g. destination address, delivery type, etc.) to determine a routing path and to determine whether the routing points in the routing path can handle the consignment.

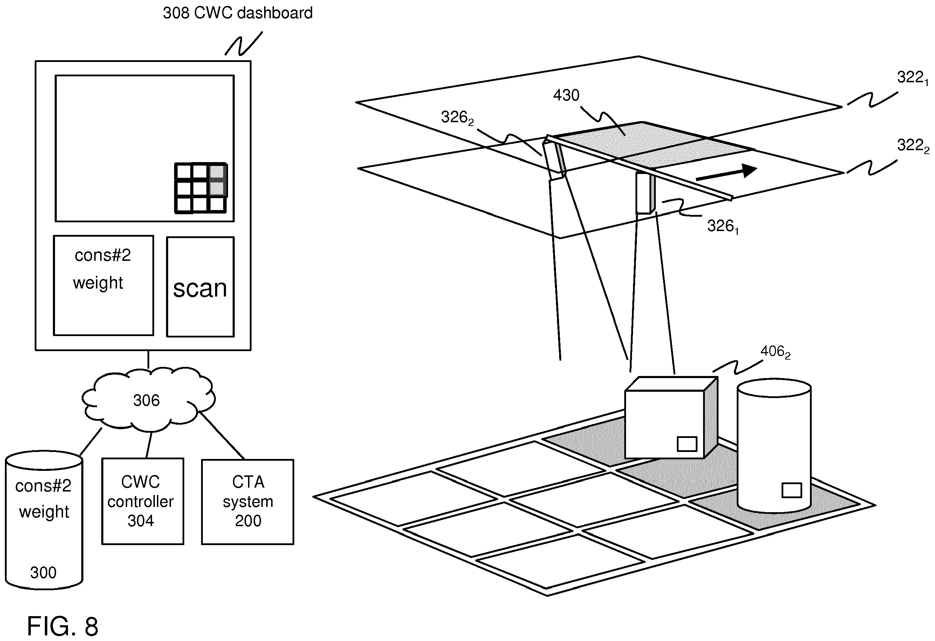

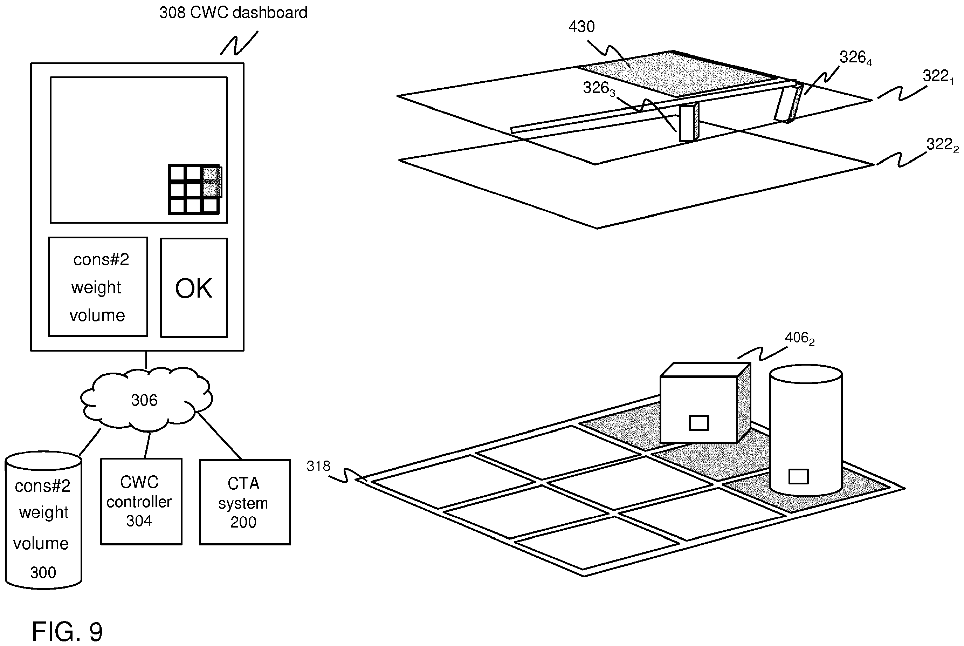

**Fig. 8** shows the second phase being repeated for consignment **406₂.** **Fig. 9** shows the third phase being repeated for consignment **406₂** after both scans have been performed in the second phase.

It is noted that the CWC controller **304** can execute the loading, weighing, scanning and unloading process depicted in **Figs. 4** to **9** for multiple consignments in parallel (or at least partly in parallel). For example, during the weighing and scanning process of a first consignment a second consignment may be loaded onto scales that are not used for the weighing and scanning process of the first consignment. Alternatively and/or in addition, during the weighing and scanning process of a first consignment a third consignment can be unloaded from the weighing system.

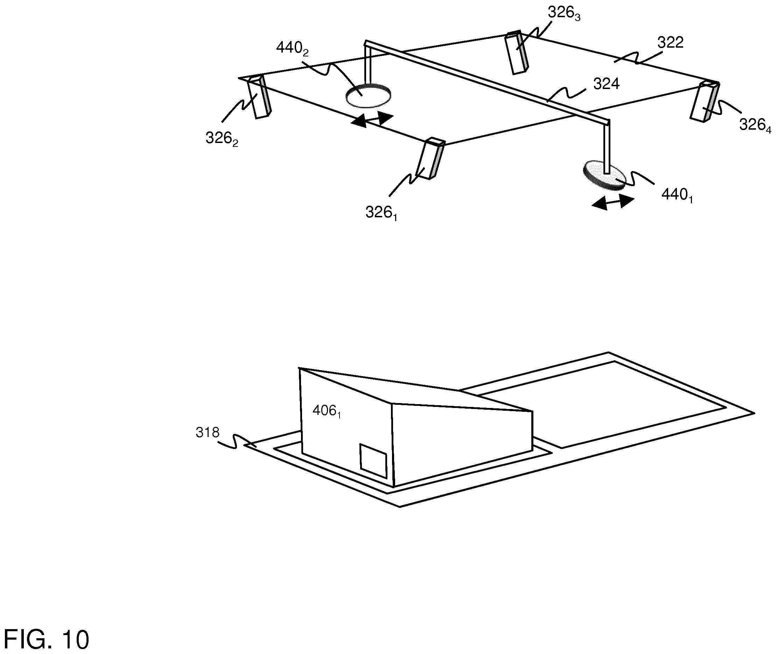

**Fig. 10** depicts a second embodiment of a Check Weight Cube (CWC) **302** for non-conveyables. In this embodiment, the weighing system **318** only comprises two measurement areas. The first consignment **406₁** is shown placed in the first measurement area. As in the first embodiment, the volume scanning system **322** of the second embodiment comprises four cameras **326₁₋₄,** but in the second embodiment, the cameras are fixed at the edges of the volume scanning system **322** and are not movable. The cameras **326₁₋₄** are used to create a surround view, e.g. 360 degree view, of the first consignment **406₁.** In the second embodiment, the volume scanning system **322** comprises a single movable frame **324.** On this movable frame **324**, two laser distance measurement devices **440₁₋₂** have been mounted at the ends, i.e. at fixed positions, of the moveable frame **324**. By moving the movable frame **324**, these laser distance measurement devices **440₁₋₂** are used to create a point cloud to represent the external surface of the first consignment **406₁.** By analyzing this point cloud, the size, e.g. the volume and/or the dimensions, of the consignment may be determined.

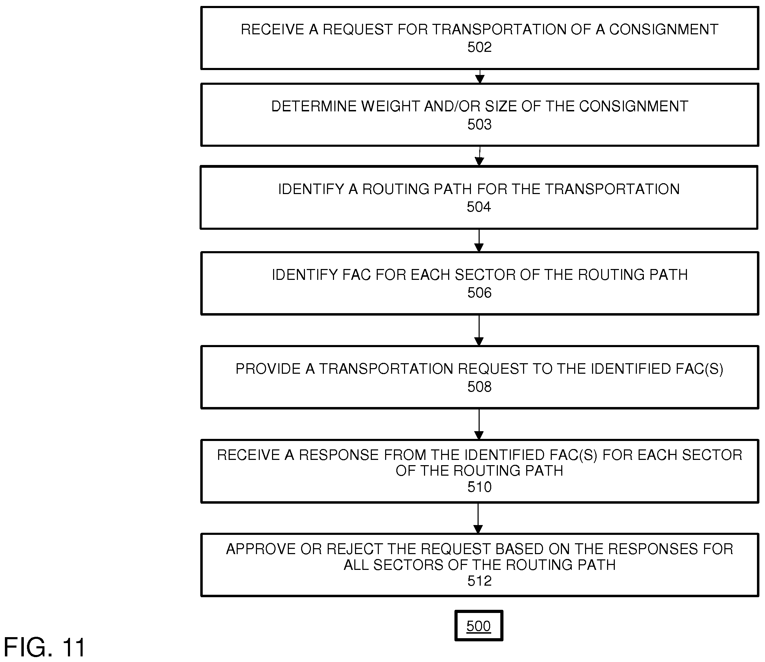

**Fig. 11** is a flow diagram of method steps for receiving a request to transport a consignment according to an embodiment of the invention. While the method steps are described in conjunction with the elements shown in **Figs. 1** and **2**, persons skilled in the art will recognize that any system configured to perform the method steps, in any order, is within the scope of the present invention.

The method may begin with step **502**, where the CTA system **200** receives a request to transport the consignment, e.g. via the user interface **206**. At a minimum, the request identifies a destination address. The destination address may be a destination depot or alternatively may allow at least one destination depot near the destination address to be located, for example. In an embodiment, the request also contains additional information that may be useful in approving transportation of the consignment, such as e.g. a service level for the transportation of the consignment, a collection date for collecting the consignment for transportation, a delivery date for delivering the consignment to the destination depot and/or to the delivery (PUD) address, weight and/or dimensions of the consignment, whether the consignment is stackable and/or palletized, etc. Each of the pieces of information included in the request could be selected, e.g. by the user, from a respective list of selectable items, which lists could e.g. be stored in the database **210**.

In step **503**, the weight and/or size of the consignment is/are measured using a measurement system like the one described in relation to **Figs. 3** to **9** or described in relation to **Fig.10****.** The measured weight and/or size of the consignment may be received from the database **300** or directly from the CWC **302** using a receiver, for example.

In step **504**, the CTA system **200**, e.g. the routing path manager **212**, identifies at least one routing path for the transportation of the consignment in accordance with the information provided in or determined from the request. In some embodiments, the information included in the request may be such that it allows unique identification of a routing path (i.e., a single routing path is identified). In other embodiments, different routing paths may be identified and then the alternatives considered, either sequentially or in some time-overlapping manner, to determine the most optimum fit with the request. The remaining steps of the method **500** shown in **Fig. 11** are described with respect to a particular routing path being evaluated.

A routing path is a path for routing transportation of the consignment from the origin depot to the destination depot. To that end, the routing path includes a plurality of routing points which include at least a destination depot and at least one intermediate routing point between the origin depot and the destination depot. A part of the routing path between two consecutive routing points is referred to herein as a sector. Thus, a routing path includes at least two sectors: one sector between the origin depot and the intermediate routing point, and another sector between the intermediate routing point and the destination depot.

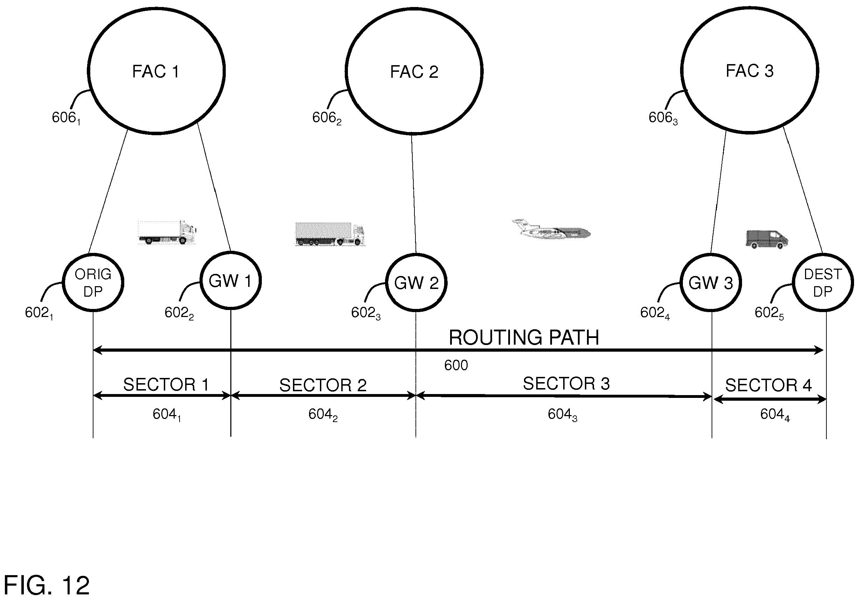

**Fig. 12** depicts an example of a routing path **400** divided into sectors according to an embodiment of the invention. As shown in **Fig. 12**, the routing path includes five routing points **602₁** through **602₅** forming four sectors **604₁** through **604₄.** The routing points include an origin depot **602₁,** three intermediate gateways **602₂** through **602₄,** and a destination depot **602₅.**

The method then proceeds to step **506**, where the CTA system **200**, e.g. the approval manager **220**, identifies a FAC associated with (i.e. assigned to) each routing point of the routing path. Since each sector is defined by two routing points, in general, each sector may be considered to be associated with two FACs (one FAC per end of the sector). In case both routing points of the sector are associated with the same FAC, then the entire sector is associated with one FAC. The exemplary routing path **600** shown in **Fig. 12** illustrates that the first two routing points of the routing path **600** are associated with the same FAC, FAC **606₁,** the third routing point is associated with a different FAC, FAC **606₂,** while the last two routing points of the routing path **600** are again associated with the same FAC, FAC **606₃.**

In step **508**, the CTA system **200** provides a transportation request to one or more of the FACs, and possibly each FAC, that was identified in step **506**. The transportation request may be the same as the customer request received via the user interface **206** or a derivation thereof, for example. Each FAC that has received a transportation request then approves or rejects transportation of the consignment over the sector of the routing path that the FAC is responsible for.

With reference to **Fig. 12**, in order to approve (or reject) transportation of the consignment over the sector 2 of the routing path **600**, the request is provided to FAC 1 and FAC 2 because these are the FACs associated with the two routing points defining sector 2. Each of these FACs then approves or rejects the request based on its respective considerations.

In an embodiment, the CTA system **200** may be configured so that, when two different FACs are involved in approving a transportation request over a particular sector, each FAC receives information indicative of the approval process of the other FAC. Thus, e.g. for sector 2 of **Fig. 12**, FAC 1 would receive information indicating whether FAC 2 has approved or rejected the request for transportation of the consignment over sector 2, and vice versa. Similarly, in an embodiment, the CTA system **200** may be configured so that, when multiple different FACs are involved in approving a request for transportation of the consignment over the routing path, each FAC receives information indicative of the approval process of the other FACs. Thus, e.g. for sector 2 of **Fig. 12**, FAC 1 would receive not only the information indicating whether FAC 2 has approved or rejected the request for transportation of the consignment over sector 2, but also information regarding approval of the request for sector 3 by each of FAC 2 and FAC 3, as well as information regarding approval of the request for both routing points of sector 4 by FAC 3. In such embodiments, the CTA system **200**, in particular each FAC, may be configured to adjust constraints and/or conditions applied by a FAC to approving a transportation request over a particular sector that the FAC is responsible for based on whether the transportation request has been approved or rejected for other sectors.

In step **510**, the CTA system **200** receives a response from each FAC to which a transportation request was provided in step **508**, indicating whether the FAC approves or rejects the request for transportation of the consignment for each sector that the FAC is responsible for. For the example illustrated in **Fig. 11**, the CTA system **200** might receive a response from FAC 1 for sector 1, a response from FAC 1 and a response from FAC 2 for sector 2, a response from FAC 2 and a response from FAC 3 for sector 3, and a response from FAC 3 for sector 4.

Based on the responses received in step **510**, in step **512** the CTA system 200 is configured to approve or reject the request for transportation of the consignment along the entire routing path. In particular, the CTA system **200** is configured to approve the request, i.e. determine that the routing path can be used to transport the consignment, if an indication of approval has been received for all sectors of the routing path. Otherwise, the CTA system **200** rejects the request, i.e. determines that the routing path cannot be used to transport the consignment.

In an embodiment, the CTA system **200** displays the approved routing path on a display of a computer system, e.g. via the user interface **206** and/or provides the approved routing path to the user in some other manner (e.g., by email or a text message on a cellular phone of the user).

In an embodiment, the CTA system **200** may provide an indication of approval or rejection of the customer request to the delivery network itself, in particular to the routing points involved. Such an embodiment advantageously allows giving a notice to the routing points so that the routing points can be prepared for the upcoming transportation of the consignment.

In an embodiment, the CTA system **200** may have a communication link, preferably a real-time link, to other systems within the delivery network so that the CTA system **200** may receive information from the other systems which may affect the decision-making process of approving or rejecting the request by the CTA system **200** and/or so that the CTA system **200** could keep the other systems up to date with respect to approval of the requests.

In an embodiment, method steps performed by the CTA system **200** may be time-stamped, thereby allowing e.g. measuring the response times of transportation requests and assisting trouble-shooting in case any problems in the processing of a transportation request arise.

In an embodiment, the CTA system **200** may be configured to map out the routing points of one or more routing paths on a digital roadmap, e.g. via the user interface **206**. This way, a route between the origin and destination depots may be visualized for users of the system. Further, the CTA system **200** may use the digital roadmap data for determining the distance and traveling times between routing points.

In an embodiment, the CTA system **200** may be configured to repeat steps **506-512** for an alternative routing path that may be identified as described above for step **504**. Such an embodiment may be particularly useful if a transportation request along routing path has been rejected. However, even if a request for transportation of consignment along one routing path has been approved, repeating steps **506-512** for an alternative routing path may still be advantageous in that the CTA system **200** may then be able to provide a user with a choice among different approved routing paths.

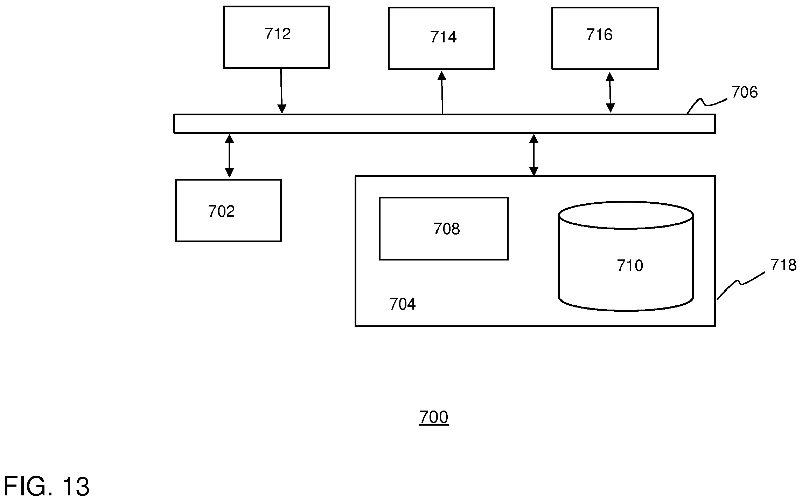

**Fig. 13** depicts a block diagram illustrating an exemplary data processing system **700** that may be used in a system for receiving a request to transport a consignment according to the invention. The CTA system **200**, or a part thereof, may be implemented as the system **700**. As shown in **Fig. 13**, the data processing system **700** may include at least one processor **702** coupled to memory elements **704** through a system bus **706**. The processor may be a general-purpose or application specific processor, for example. The processor may be an Intel, AMD or ARM processor, for example. As such, the data processing system may store program code within memory elements **704**. Further, processor **702** may execute the program code accessed from memory elements **704** via system bus **706**. In one aspect, data processing system may be implemented as a computer that is suitable for storing and/or executing program code. It should be appreciated, however, that data processing system **700** may be implemented in the form of any system including a processor and memory that is capable of performing the functions described within this specification.

Memory elements **704** may include one or more physical memory devices such as, for example, local memory **708** and one or more bulk storage devices **710**. Local memory may refer to random access memory or other non-persistent memory device(s) generally used during actual execution of the program code. A bulk storage device may be implemented as a hard drive or other persistent data storage device. The processing system **700** may also include one or more cache memories (not shown) that provide temporary storage of at least some program code in order to reduce the number of times program code must be retrieved from bulk storage device **710** during execution.

Input/output (I/O) devices depicted as input device **712** and output device **714** optionally can be coupled to the data processing system. Examples of input device **712** may include, but are not limited to, for example, a keyboard, a pointing device such as a mouse, or the like. Examples of output device **714** may include, but are not limited to, for example, a monitor or display, speakers, or the like. Input device and/or output device may be coupled to data processing system either directly or through intervening I/O controllers. A network adapter **716** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **700**.

As pictured in **Fig. 13**, memory elements **704** may store an application **718**. It should be appreciated that data processing system **700** may further execute an operating system (not shown) that can facilitate execution of the application. Application, being implemented in the form of executable program code, can be executed by data processing system **700**, e.g., by processor **702**. Responsive to executing application, data processing system may be configured to perform one or more operations to be described herein in further detail.

In one aspect, for example, data processing system **700** may represent a client data processing system. In that case, application **718** may represent a client application that, when executed, configures data processing system **700** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **718**, when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A method of receiving a request to transport a consignment, comprising the steps of:
a processor receiving a customer request to transport a consignment, said customer request identifying a destination address;
a processor determining a destination depot from said customer request;
a processor determining a routing path for transportation of said consignment from said customer request by using routing point information stored on a storage facility, said routing path comprising a plurality of routing points, said plurality of routing points comprising said destination depot and at least one intermediate routing point between an origin depot and said destination depot;
a processor receiving a measured weight and/or a measured size of said consignment from a measurement system at said origin depot; and
a processor determining whether said routing path can be used for transportation of said consignment by checking whether said measured weight and/or said measured size can be handled by each of said plurality of routing points.

2. A method as claimed in claim 1, wherein said step of a processor determining whether said routing path can be used for transporting said consignment comprises the steps of:
a processor identifying at least one approver associated with one or more of said plurality of routing points;
a processor providing a transportation request to each of said at least one approver, said transportation request comprising said measured weight and/or said measured size;
a processor receiving a response to said transportation request from each of said at least one approver;
a processor determining from said received responses that said routing path can be used for transportation of said consignment if each of said at least one approver approves said transportation request; and
a processor determining from said received responses that said routing path cannot be used for transportation of said consignment if at least one of said at least one approver rejects said transportation request.

3. A method as claimed in claim 2, wherein said step of a processor identifying at least one approver associated with one or more of said plurality of routing points comprises a processor comparing said measured weight and/or said measured size with one or more weight thresholds and/or size thresholds, each weight threshold and/or size threshold being associated with one or more routing points of said routing path, and a processor identifying at least one approver associated with one or more routing points with which a weight threshold lower than said measured weight and/or a size threshold lower than said measured size is associated.

4. A method as claimed in claim 2 or 3, wherein said transportation request comprises at least part of at least one image captured by at least one camera.

5. A method as claimed in any one of the preceding claims, wherein said measured size of said consignment comprises at least one of a volume, one or more dimensions and a shape of said consignment.

6. A method as claimed in any one of the preceding claims, wherein said customer request comprises an indicated weight and/or an indicated size of said consignment and said method further comprises the step of a processor determining whether said routing path can be used for transportation of said consignment by checking whether said indicated weight and/or indicated size can be handled by each of said plurality of routing points.

7. A method as claimed in claim 6, further comprising the step of comparing said measured weight and/or said measured size with said indicated weight and/or said indicated size and wherein said step of a processor determining whether said routing path can be used for transportation of said consignment by checking whether said measured weight and/or said measured size can be handled by each of said plurality of routing points is only performed if said measured weight and/or said measured size deviate more than a certain amount from said indicated weight and/or said indicated size.

8. A method as claimed in claim 7, wherein said step of a processor determining whether said routing path can be used for transportation of said consignment by checking whether said measured weight and/or said measured size can be handled by each of said plurality of routing points is only performed if said measured weight is at least a certain amount higher than said indicated weight and/or a largest measured dimension of said consignment is at least a certain amount larger than a largest indicated dimension of said consignment.

9. A method as claimed in any one of the preceding claims, wherein said customer request further comprises information indicating a service level for transportation of said consignment, said service level being selectable from a plurality of service levels.

10. A method as claimed in any one of the preceding claims, wherein said customer request further comprises information indicating a collection date for collecting said consignment for transportation.

11. A method as claimed in any one of the preceding claims, wherein said plurality of routing points comprises two or more intermediate points between said origin depot and said destination depot.

12. A method as claimed in any one of the preceding claims, wherein if said processor has determined that said routing path cannot be used for transporting said consignment, said method further comprises the steps of:
a processor determining an alternative routing path for transportation of said consignment from said customer request by using said routing point information, said alternative routing path comprising said destination depot and at least one alternative intermediate routing point between said origin depot and said destination depot or an alternative destination depot and at least one intermediate routing point between said origin depot and said alternative destination depot; and
a processor determining whether said alternative routing path can be used for transportation of said consignment by checking whether said measured weight and/or said measured size can be handled by each routing point of said alternative routing path.

13. A computer program or suite of computer programs comprising at least one software code portion or a computer program product storing at least one software code portion, the software code portion, when run on a computer system, being configured for executing the method according to one or more of the claims 1-12.

14. A system for receiving a request to transport a consignment comprising:
at least one receiver;
a measurement system at an origin depot;
a storage facility for storing routing point information; and
at least one processor configured to use said at least one receiver to receive a customer request to transport a consignment, said customer request identifying a destination address, to determine a destination depot from said customer request, to determine a routing path for transportation of said consignment from said customer request by using said routing point information stored on said storage facility, said routing path comprising a plurality of routing points, said plurality of routing points comprising said destination depot and at least one intermediate routing point between said origin depot and said destination depot, to receive a measured weight and/or a measured size of said consignment from said measurement system, and to determine whether said routing path can be used for transportation of said consignment by checking whether said measured weight and/or said measured size can be handled by each of said plurality of routing points.
